# EUROPEAN PATENT APPLICATION

(11) **EP 4 654 272 A1**
(43) Date of publication of application: **26.11.2025**
(21) Application number: 23937886.2
(22) Date of filing: 22.05.2023
(51) Int. Cl.: H01M 4/13, H01M 4/62, H01M 4/58, H01M 4/505, H01M 4/525

(54) **POSITIVE ELECTRODE SHEET, BATTERY, AND ELECTRIC DEVICE**

(71) Applicant: Contemporary Amperex Technology Co., Limited, Ningde, Fujian 352100 (CN)
(72) Inventor: ZHAO, Fenggang, Ningde, Fujian 352100 (CN); YU, Honggang, Ningde, Fujian 352100 (CN); XING, Ke, Ningde, Fujian 352100 (CN); SHI, Songjun, Ningde, Fujian 352100 (CN); LAI, Youlei, Ningde, Fujian 352100 (CN); JIN, Haizu, Ningde, Fujian 352100 (CN); LI, Jingru, Ningde, Fujian 352100 (CN); CHEN, Xiangbin, Ningde, Fujian 352100 (CN)
(74) Representative: Kraus & Lederer PartGmbB
(86) International application number: PCT/CN2023/095592
(87) International publication number: WO 2024/239209

(57) **Abstract**

The present application relates to a positive electrode plate, a battery, and an electrical apparatus. The positive electrode plate includes a current collector, a conductive coating, a first active material layer and a second active material layer, where the conductive coating is formed on a surface of the current collector, the first active material layer is formed on a surface of the conductive coating, and the second active material layer is formed on a surface of the first active material layer; the first active material layer includes a first active material; the second active material layer includes a second active material; the first active material does not catch fire in a nail penetration test; and the second active material has a gram capacity greater than or equal to 165 mAh/g. The upper layer is made of a high energy-density material, and since it is closer to a positive electrode and a separator, a Li⁺ transport path is shortened for better performance of capacity, energy and power. The lower layer is made of a high-security material to block a direct contact between the upper layer or the positive electrode and the current collector, and accordingly it has the properties such as resistance to internal short-circuits and nail penetration. Moreover, the conductive coating arranged on the surface of the current collector helps to reduce impedance of a negative electrode and enhance lithium intercalation and deintercalation activity of the negative electrode.

## Description

### TECHNICAL FIELD

The present application relates to a positive electrode plate, a battery, and an electrical apparatus.

### BACKGROUND

In recent years, with development of lithium-ion secondary battery techniques, the lithium-ion secondary batteries are widely used in energy storage power systems such as hydroelectric, thermal, wind and solar power stations, as well as power tools, electric bicycles, electric motorcycles, electric vehicles, military equipment, aerospace and other fields. Due to the great development of lithium-ion secondary batteries, higher requirements have also been put forward for their capacity and probability of thermal runaway.

### SUMMARY OF THE INVENTION

An objective of the present application is to provide a positive electrode plate, a battery and an electrical apparatus.

Embodiments of the present application are implemented as follows.

In a first aspect, embodiments of the present application provide a positive electrode plate, including a current collector, a conductive coating, a first active material layer and a second active material layer, where the conductive coating is formed on a surface of the current collector, the first active material layer is formed on a surface of the conductive coating, and the second active material layer is formed on a surface of the first active material layer;
the first active material layer includes a first active material; the second active material layer includes a second active material;
the first active material does not catch fire in a nail penetration test, and a method of fire-free nail penetration test includes using the first active material to make a battery cell, charging the battery cell to 100% stage of charge, restraining the battery cell by a steel fixture having a hole in the middle, using a steel nail with a diameter of 2 mm to vertically penetrate the battery cell at a speed of 10 mm/s at 25°C; and standing for 30 min, during which the battery cell does not catch fire; and
the second active material has a gram capacity greater than or equal to 165 mAh/g.

In the above technical solution, the first active material layer and the second active material layer are arranged in layers and have a specific positional relationship, which is conducive to making full use of their respective properties. The upper layer is made of a high energy-density material (the gram capacity is greater than or equal to 165 mAh/g), and since it is closer to a positive electrode and a separator, a Li⁺ transport path is shortened for better performance of capacity, energy and power. The lower layer is made of a high-security material to block a direct contact between the upper layer or the positive electrode and the current collector, and accordingly it has the properties such as resistance to internal short-circuits and nail penetration. Moreover, the conductive coating arranged on the surface of the current collector helps to reduce impedance of the positive electrode and enhance lithium intercalation and deintercalation activity of the positive electrode, thereby helping the battery to show a higher capacity. Therefore, the above technical solution may reduce the probability of battery thermal runaway while improving battery capacity.

In some optional embodiments, the first active material is subjected to a battery cell hot box test, and thermal runaway occurs at a temperature greater than 160°C
A method of the battery cell hot box test includes using the first active material to make a battery cell, charging the battery cell to 100% state of charge, restraining the battery cell by a steel fixture, placing the battery cell in an oven and then standing, where the oven starting temperature is 130°C, and confirming the state of the battery cell after standing for 1 hour; if the battery cell does not fail after standing for 1 hour, increasing the temperature at 5°C/min, and standing for 30 min every time the temperature increases by 5°C, until thermal runaway occurs in the battery cell.

The first active material is subjected to the battery cell hot box test, and thermal runaway occurs at a temperature greater than 160°C. Accordingly, it has excellent thermal runaway resistance, which is further conducive to reducing the probability of thermal runaway of the battery.

In some optional embodiments, the first active material includes at least one of an olivine structural material or a spinel structural material.

At least one of the olivine structural material or the spinel structural material is selected as the first active material, and these materials have the property of reducing the probability of thermal runaway of the battery, which is conducive to reducing the probability of thermal runaway of the battery.

In some optional embodiments, the olivine structural material includes at least one of a lithium iron phosphate material, a lithium manganese iron phosphate material, or a lithium vanadium phosphate material.

In the above technical solution, the lithium iron phosphate material, the lithium manganese iron phosphate material, or the lithium vanadium phosphate material has an excellent property of reducing the probability of thermal runaway of the battery and is easy to obtain, which is conducive to obtaining a positive electrode plate with excellent performance.

In some optional embodiments, the spinel structural material includes at least one of materials of LiMn₂O₄, Li₂MnNiO₄, or lithium titanate.

In the above technical solution, the material of LiMn₂O₄, Li₂MnNiO₄, or lithium titanate has an excellent property of reducing the probability of thermal runaway of the battery, which is conducive to obtaining a positive electrode plate with excellent performance.

In some optional embodiments, the first active material layer has a thickness of 7 µm to 80 µm; optionally, the first active material layer has a thickness of 15 µm to 50 µm.

Since the thickness of the first active material layer is set within the above range, the function of the first active material can be fully utilized and the battery miniaturization is facilitated.

In some optional embodiments, Dᵥ50 of particles contained in the first active material layer is 0.5 µm to 20 µm.

Within the above-mentioned particle size range, a first active material layer with good performance can be easily obtained.

In some optional embodiments, the second active material has a gram capacity of 175 mAh/g to 250 mAh/g.

Since the gram capacity of the second active material is limited to 175 mAh/g to 250 mAh/g, it is beneficial to improve the battery capacity.

In some optional embodiments, the second active material has a voltage plateau greater than or equal to 3.22 V, optionally, the second active material has a voltage plateau of 3.5 V to 3.9 V.

Since the voltage plateau of the second active material is limited to be greater than or equal to 3.22 V, it is beneficial to improve the battery capacity.

In some optional embodiments, the second active material includes a layered structural material.

The layered structural material has the property of high energy density, which is conducive to improving the battery capacity.

In some optional embodiments, the layered structural material includes at least one of a layered ternary material, lithium cobalt oxide, and a lithium-rich manganese-based material.

The layered ternary material, lithium cobalt oxide, and lithium-rich manganese-based material all have the property of high energy density, which is conducive to improving the battery capacity.

In some optional embodiments, the second active material layer has a thickness of 7 µm to 67 µm; optionally, the second active material layer has a thickness of 15 µm to 50 µm.

Since the thickness of the second active material layer is set to be 7 µm to 67 µm, the properties of the second active material can be effectively utilized and the battery miniaturization is facilitated.

In some optional embodiments, Dᵥ50 of particles contained in the second active material layer is 1 µm to 20 µm.

Since the average particle size of the particles contained in the second active material layer is set to be 1 µm to 20 µm within the above range, it is beneficial to form a second active material layer with good performance.

In some optional embodiments, the conductive coating has a thickness of 0.1 µm to 2 µm; optionally, the conductive coating has a thickness of 0.5 µm to 1.5 µm.

Since the thickness of the conductive coating is set within the above range, both the battery miniaturization and the function of the conductive coating can be balanced.

In some embodiments, the conductive coating includes a conductive agent and a binder.

The conductive coating has good conductivity and adhesion. The conductivity is mainly achieved through the conductive agent, which helps to reduce the negative electrode impedance and improve the negative electrode lithium intercalation and deintercalation activity, and the corresponding battery has higher capacity, power and low-temperature performance; the adhesion is mainly achieved through the binder, which helps to connect the first active material layer and the current collector more firmly and reduce the shedding of active materials during the electrode plate slitting and winding process, and facilitates long-term reliability.

In some optional embodiments, the conductive coating includes, by mass percentage, 40% to 60% of the conductive agent and 40% to 60% of the binder.

Under the above-mentioned ratio range, a conductive coating with good conductivity and good adhesion performance can be obtained.

In some embodiments, the conductive coating further includes a neutralizing agent.

Adding the neutralizing agent to the conductive coating to adjust the pH can improve the corrosion resistance of a positive electrode current collector (aluminum foil). Moreover, the neutralizing agent can form positive and negative charge attraction between the current collector and the first active material layer, further enhancing the bonding between the first active material layer and the current collector.

In some optional embodiments, the conductive coating includes, by mass percentage, 40% to 55% of the conductive agent, 40% to 55% of the binder, and 1 to 10% of the neutralizing agent.

Under the above-mentioned ratio range, a conductive coating with excellent conductivity, excellent adhesion and good corrosion resistance of the current collector can be obtained.

In some optional embodiments, the conductive agent includes at least one of carbon black, carbon nanotubes or graphene.

At least one of the carbon black, carbon nanotubes or graphene, used as the conductive agent, has high electrical conductivity, which enables the conductive coating to achieve high conductivity and helps the battery to show a higher capacity.

In some optional embodiments, the binder includes at least one of polyacrylic acid, polyvinyl alcohol, sodium carboxymethyl cellulose, polyvinylidene difluoride, or styrene-butadiene rubber.

At least one of polyacrylic acid, polyvinyl alcohol, sodium carboxymethyl cellulose, polyvinylidene fluoride or styrene-butadiene rubber is used as a binder with high adhesion, which enables the conductive coating to achieve high adhesion, facilitates a firmer connection between the first active material layer and the current collector, reduces the shedding of active materials during the electrode plate slitting and winding process, and improves long-term reliability.

In some optional embodiments, the neutralizing agent includes at least one of calcium hydroxide or lithium hydroxide.

At least one of calcium hydroxide and lithium hydroxide, used as the neutralizing agent, can effectively adjust the pH of the conductive coating, thereby enhancing the bonding force between the first active material layer and the current collector through electrostatic attraction.

In a second aspect, embodiments of the present application provide a battery, including the positive electrode plate according to the first aspect.

The battery in the above technical solution includes the positive electrode plate according to the first aspect, which can reduce the probability of thermal runaway of the battery while improving the battery capacity.

In a third aspect, embodiments of the present application provide an electrical apparatus, including the battery according to the second aspect.

### DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
Fig. 1 is a schematic structural diagram of a vehicle according to some embodiments of the present application;
Fig. 2 is an exploded view of a battery according to some embodiments of the present application;
Fig. 3 is an exploded diagram of the battery cell shown in Fig. 2;
Fig. 4 is a schematic partial structural diagram of an electrode assembly according to some embodiments of the present application; and
Fig. 5 is a schematic partial structural diagram of a positive electrode plate according to some embodiments of the present application.

### Reference numerals:

vehicle 1000;
battery 100; controller 200; motor 300;
box body 10; first part 11; second part 12; accommodating space 13;
battery cell 20; shell 21, electrode assembly 22; electrode terminal 23; pressure relief structure 24;
case 211; cover 212; positive electrode plate 221; negative electrode plate 222; separator 223;
positive electrode current collector 2211; positive electrode active material layer 2212;
negative composite current collector 2221; negative active material layer 2222.

### DETAILED DESCRIPTION

Embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as commonly understood by those skilled in the technical field to which the present application belongs. The terms used herein are intended only for the purpose of describing specific embodiments and are not intended to limit the present application. The terms "include" and "have" and any variations thereof in the specification and the claims of the present application and in the above Description of Drawings are intended to encompass non-exclusive inclusion.

In the description of the embodiments of the present application, the technical terms "first," "second," and the like are used only to distinguish between different objects, and are not to be understood as indicating or implying a relative importance or implicitly specifying the number, particular order, or primary and secondary relation of the technical features indicated.

In the description of the embodiments of the present application, the technical terms "outer", "inner", and the like indicate orientations or positional relationships based on the orientations or positional relationships shown in the drawings, and are intended only to facilitate and simplify the description of the embodiments of the present application, and are not intended to indicate or imply that the apparatus or element referred to must have a particular orientation, or be constructed and operated in a particular orientation, and therefore should not be construed as limitation of the embodiments of the present application.

In the description of the embodiments of the present application, unless otherwise explicitly stipulated and defined, the technical terms of "mount", "connected", "connecting" and "fixed" should be understood in a broad sense. For example, there may be a fixed connection, a detachable connection, or an integrated connection; and there may be a direct connection or an indirect connection through an intermediate medium. For those of ordinary skill in the art, the specific meanings of the aforementioned terms in the embodiments of the present application can be understood according to specific situations.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the embodiments of the present application, like reference numerals indicate like components, and for the sake of brevity, detailed description of the same components is omitted in different embodiments. It should be understood that the height, length, width and other sizes of the various components in the embodiments of the present application shown in the drawings, as well as the overall height, length, width and other sizes of an integrated apparatus, are for illustrative purposes only, and should not constitute any limitation to the present application.

A positive electrode made of a single active material cannot meet the requirements for higher battery performance. The mixing of two active materials can achieve the performance of the two active materials, which is expected to make a battery obtain higher performance. However, the physical direct mixing method will bring problems such as gelating with stirring due to differences in the particle size, pH value, specific surface area and other properties of the two materials. It may also bring other problems to the battery performance, such as increasing the probability of thermal runaway of the battery while pursuing the property of high energy density.

An embodiment of the present application provides a positive electrode plate, including a current collector, a conductive coating, a first active material layer and a second active material layer, where the conductive coating is formed on a surface of the current collector, the first active material layer is formed on a surface of the conductive coating, and the second active material layer is formed on a surface of the first active material layer;

the first active material layer includes a first active material; the second active material layer includes a second active material;

the first active material does not catch fire in a nail penetration test, and a method of fire-free nail penetration test includes using the first active material to make a battery cell, charging the battery cell to 100% stage of charge, restraining the battery cell by a steel fixture having a hole in the middle, using a steel nail with a diameter of 2 mm to vertically penetrate the battery cell at a speed of 10 mm/s at 25°C; and standing for 30 min, during which the battery cell does not catch fire; and

the second active material has a gram capacity greater than or equal to 165 mAh/g.

In the above technical solution, the first active material layer and the second active material layer are arranged in layers and have a specific positional relationship, which is conducive to making full use of their respective properties. The upper layer is made of a high energy-density material (the gram capacity is greater than or equal to 165 mAh/g), and since it is closer to a positive electrode and a separator, a Li⁺ transport path is shortened for better performance of capacity, energy and power. The lower layer is made of a high-security material to block a direct contact between the upper layer or the positive electrode and the current collector, and accordingly it has the properties such as resistance to internal short-circuits and nail penetration. Moreover, the conductive coating arranged on the surface of the current collector helps to reduce impedance of the positive electrode and enhance lithium intercalation and deintercalation activity of the positive electrode, thereby helping the battery to show a higher capacity. Therefore, the above technical solution may reduce the probability of battery thermal runaway while improving battery capacity.

The battery provided in the present application includes the aforementioned positive electrode plate, which is conducive to increasing the battery capacity of the electrical apparatus while reducing the probability of thermal runaway of the battery.

The electrical apparatus of the present application includes the battery provided in the present application, which is conducive to improving performance of the electrical apparatus.

For ease of description, the following embodiments are illustrated by taking a lithium-ion battery in an embodiment of the present application as an example.

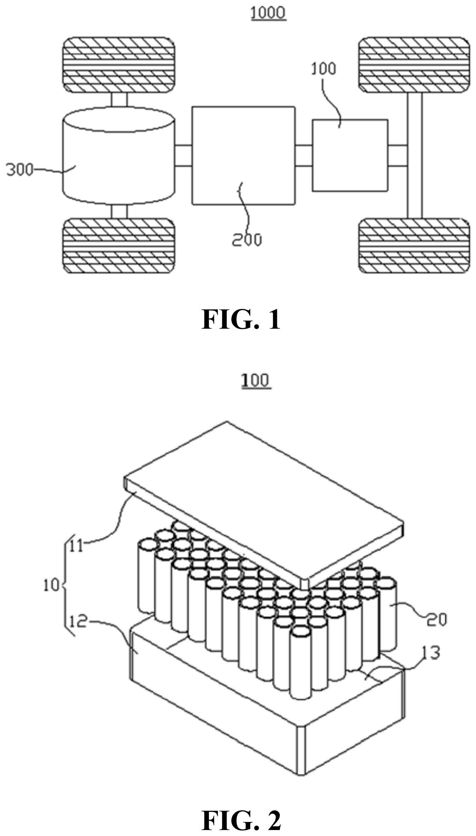

Referring to Fig. 1, Fig. 1 is a schematic structural diagram of a vehicle 1000 according to some embodiments of the present application. The vehicle 1000 may be a fuel vehicle, a gas vehicle, or a new energy vehicle. The new energy vehicle may be an all-electric vehicle, a hybrid vehicle, an extended-range electric vehicle, etc. A battery 100 is arranged in the vehicle 1000. The battery 100 may be arranged at the bottom, or head, or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is used to control the battery 100 to supply power to the motor 300, for example, for the operating power demand when the vehicle 1000 is starting, navigating and driving.

In some examples of the present application, the battery 100 not only can serve as an operating power source of the vehicle 1000, but also can serve as a driving power source of the vehicle 1000, to provide a driving power for the vehicle 1000 in place of or partially in place of fuel or natural gas.

In the present application, the battery 100 may refer to a physical module that includes a single battery cell, or it may include a single physical module that includes a plurality of battery cells 20 to provide higher voltage and capacity. The battery 100 may be in the form of a battery module or a battery pack, etc. The battery 100 may include a box 10 for enclosing one or more battery cells 20. The box 10 may prevent liquids or other foreign matters from affecting charging or discharging of the battery cells 20.

Referring to Fig. 2, Fig. 2 is an exploded view of a battery 100 provided in some embodiments of the present application. The battery 100 may include a box body 10 and a battery cell 20. The battery cell 20 is accommodated in the box body 10. The box body 10 is used to accommodate the battery cell 20, and the box body 10 may be of various structures. In some embodiments, the box body 10 may include a first part 11 and a second part 12. The first part 11 and the second part 12 cover each other, and the first part 11 and the second part 12 together define the accommodating space 13 for accommodating the battery cell 20. The second part 12 may have a hollow structure with one end open, and the first part 11 has a plate-like structure. The first part 11 covers the open side of the second part 12 to form the box body 10 having the accommodating space 13. The first part 11 and the second part 12 can also both have a hollow structure with one side open, and the open side of the first part 11 covers the open side of the second part 12 to form the box body 10 having the accommodating space 13. Of course, the first portion 11 and the second portion 12 may be of a variety of shapes, such as a cylinder or a cuboid.

There may be one or more battery cells 20 in the battery 100. If there are a plurality of battery cells 20, the plurality of battery cells 20 may be connected in series or parallel or in a mixed connection, where the mixed connection means that the plurality of battery cells 20 are connected in both series and parallel. The plurality of battery cells 20 may be directly connected in series or in parallel or may be in parallel-series connection, and then an entirety composed of all the plurality of battery cells 20 is accommodated in the box body 10. The case may also be that a plurality of battery cells 20 are connected in series, or in parallel, or in parallel-series in advance to form a battery module, and a plurality of battery modules are then connected in series, or in parallel, or in parallel-series to form an entirety, which is accommodated in the box body 10. The battery 100 may also include other structures, for example, the plurality of battery cells 20 can be electrically connected through a convergence component so as to realize the parallel connection or series connection or series-parallel connection of the plurality of battery cells 20.

Each battery cell 20 may be a lithium-ion battery, such as a secondary battery or a primary battery; or it may be a lithium-sulfur battery, a sodium-ion battery or a magnesium-ion battery, but is not limited thereto.

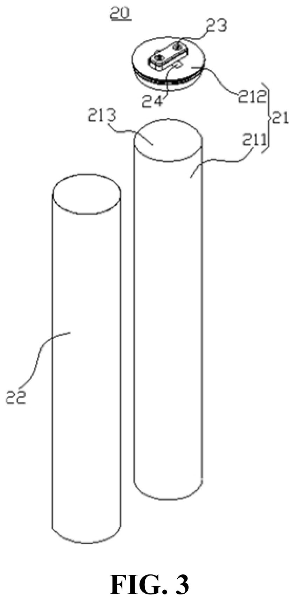

Referring to Fig. 3, Fig. 3 is an exploded diagram of the battery cell 20 shown in Fig. 2. The battery cell 20 refers to a smallest unit constituting a battery 100. The battery cell 20 may include a shell 21, an electrode assembly 22, and an electrolyte, where the electrode assembly 22 and the electrolyte are both accommodated within the shell 21.

The shell 21 may include a case 211 and a cover 212. The case 211 is an assembly for matching the cover 212 to form the internal sealed space of the battery cell 20. The formed sealed space may be used to accommodate the electrode assembly 22, the electrolyte solution and other components. The cover 212 refers to a component that covers the opening of the case 211 to isolate the internal environment of the battery cell 20 from the external environment. The shape of the cover 212 can be adapted to the shape of the case 211 to match the case 211. Functional components such as an electrode terminal 23 and a pressure relief structure 24 can also be provided on the cover 212. A sealing ring may be arranged between the opening of the case 211 and the cover 212 to achieve sealing between the case 211 and the cover 212.

The case 211 and the cover 212 may have various shapes and sizes, such as a cuboid, a cylinder, or a hexagonal prism. Specifically, the shapes of the case 211 and the cover 212 may be determined according to the specific shape and size of the electrode assembly 22. The case 211 and the cover 212 may be made of various materials, such as, but not limited to copper, iron, aluminum, stainless steel, an aluminum alloy, and other metals. The sealing ring may be made of various materials, such as, but not limited to PP (polypropylene), PC (polycarbonate), PET (polyethylene terephthalate), and other materials with electrolyte corrosion resistance , high toughness, and fatigue resistance. A plating may be formed on the outer surface of the case 211, and the plating may be made of various materials, such as but not limited to corrosion-resistant materials including Ni, Cr, etc.

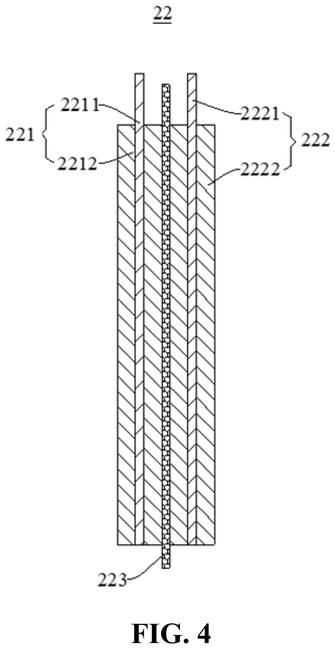

Referring to Fig. 4, the electrode assembly 22 may consist of a positive electrode plate 221, a negative electrode plate 222, and a separator 223. The separator 223 is provided between the positive electrode plate 221 and the negative electrode plate 222 and functions to separate. The electrode assembly 22 may be of a wound structure or a stacked structure, which is not limited in the embodiments of the present application.

Referring to Fig. 4, the negative electrode plate 222 includes a negative electrode current collector 2221 and a negative electrode active material layer 2222, the negative electrode current collector 2221 may be made of a copper material, and the negative electrode active material layer 2222 includes a negative electrode active material. The negative electrode active material includes at least one of graphite, silicon, silicon alloy or tin alloy.

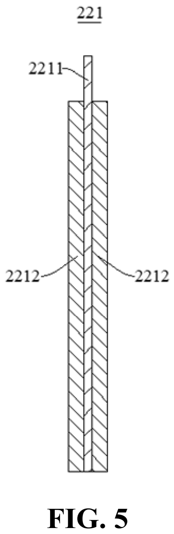

Referring to Fig. 5, the positive electrode plate 221 includes a positive electrode current collector 2211 and a positive electrode active material layer 2212. Taking the lithium-ion battery cell 20 as an example, the material of the positive electrode current collector 2211 may be aluminum foil.

Further, in some embodiments of the present application, the positive electrode plate includes a current collector, a conductive coating, a first active material layer and a second active material layer, where the conductive coating is formed on a surface of the current collector, the first active material layer is formed on a surface of the conductive coating, and the second active material layer is formed on a surface of the first active material layer;
the first active material layer includes a first active material; the second active material layer includes a second active material;
the first active material does not catch fire in a nail penetration test, and a method of fire-free nail penetration test includes using the first active material to make a battery cell, charging the battery cell to 100% stage of charge, restraining the battery cell by a steel fixture having a hole in the middle, using a steel nail with a diameter of 2 mm to vertically penetrate the battery cell at a speed of 10 mm/s at 25°C; and standing for 30 min, during which the battery cell does not catch fire; and
the second active material has a gram capacity greater than or equal to 165 mAh/g.

In the above technical solution, the first active material does not catch fire in the nail penetration test, which is conducive to reducing the probability of thermal runaway of the battery. The gram capacity of the second active material is greater than or equal to 165 mAh/g, which is conducive to improving the battery capacity. Since the first active material and the second active material are arranged in layers, the first active material that does not catch fire in the nail penetration test is disposed close to the current collector, and the second active material with a large gram capacity is arranged on the first active material, their respective properties can be fully utilized. Moreover, the conductive coating is arranged on the surface of the current collector, so that the respective properties of the conductive coating, the first active material, and the second active material can be utilized while achieving synergistic interaction, thereby reducing the probability of thermal runaway of the battery and improving the battery capacity.

Further, the first active material layer and the second active material layer are arranged in layers and have a specific positional relationship, which is conducive to making full use of their respective properties. The upper layer is made of a high energy-density material (the gram capacity is greater than or equal to 165 mAh/g), and since it is closer to a positive electrode and a separator, a Li⁺ transport path is shortened for better performance of capacity, energy and power. The lower layer is made of a high-security material to block a direct contact between the upper layer or the positive electrode and the current collector, and accordingly it has the properties such as resistance to internal short-circuit and nail penetration. Moreover, the conductive coating arranged on the surface of the current collector helps to reduce impedance of the positive electrode and enhance lithium intercalation and deintercalation activity of the positive electrode, thereby helping the battery to show higher capacity and cycling capacity retention rate.

Further, compared with the physical mixing method (the first active material is mixed with the second active material and then coated as one layer); the first active material layer and the second active material layer are distributed in layers in a thickness direction of the negative electrode plate, which may avoid the problem of gelating with stirring caused by great differences in properties of the two materials (e.g., particle size, pH value, and specific surface area). Compared with the physical mixing method, the above solution is more suitable for large-scale mass production.

Further, in some optional embodiments of the present application, the first active material is subjected to a battery cell hot box test, and thermal runaway occurs at a temperature greater than 160°C.

A method of the battery cell hot box test includes using the first active material to make a battery cell, charging the battery cell to 100% state of charge, restraining the battery cell by a steel fixture, placing the battery cell in an oven and then standing, where the oven starting temperature is 130°C, and confirming the state of the battery cell after standing for 1 hour; if the battery cell does not fail after standing for 1 hour, increasing the temperature at 5°C/min, and standing for 30 min every time the temperature increases by 5°C, until thermal runaway occurs in the battery cell.

The first active material does not catch fire or explode in the cell hot box test at a temperature greater than 160°C, and accordingly, it has excellent thermal runaway resistance, which is further conducive to reducing the probability of thermal runaway of the battery.

Further, in some optional embodiments of the present application, the first active material includes at least one of an olivine structural material or a spinel structural material.

At least one of the olivine structural material or the spinel structural material is selected as the first active material, and these materials have the property of reducing the probability of thermal runaway of the battery, which is conducive to reducing the probability of thermal runaway of the battery.

Illustratively, in some embodiments of the present application, the first active material is selected from any one of the olivine structural material or the spinel structural material; or the first active material is selected from a mixture of the olivine structural material and the spinel structural material, and in the mixture, the two raw materials can be mixed in any proportion.

Further, in some optional embodiments of the present application, the olivine structural material includes at least one of a lithium iron phosphate material, a lithium manganese iron phosphate material, or a lithium vanadium phosphate material.

The lithium iron phosphate material, the lithium manganese iron phosphate material, or the lithium vanadium phosphate material has an excellent property of reducing the probability of thermal runaway of the battery and is easy to obtain, which is conducive to obtaining a positive electrode plate with excellent performance.

Further, in some embodiments of the present application, the lithium manganese iron phosphate material includes:
LiₐAₑMn_{1-f}B_{f}P_{1-g}C_{g}O₄₋ₙDₙ, where A includes one or more of Zn, Al, Na, K, Mg, Nb, Mo, and W, B includes one or more of Ti, V, Zr, Fe, Ni, Mg, Co, Ga, Sn, Sb, Nb, and Ge; C includes one or more of B, S, Si, and N; D includes one or more elements of S, F, Cl and Br; a is selected from the range of 0.9 to 1.1, e is selected from the range of 0.001 to 0.1, f is selected from the range of 0.001 to 0.5, g is selected from the range of 0.001 to 0.1, n is selected from the range of 0.001 to 0.1, and preferably a+e is from 0 to 1.1.

Further, in some optional embodiments of the present application, the spinel structural material includes at least one of materials of LiMn₂O₄, Li₂MnNiO₄, or lithium titanate.

The material of LiMn₂O₄, Li₂MnNiO₄, or lithium titanate has an excellent property of reducing the probability of thermal runaway of the battery, which is conducive to obtaining a positive electrode plate with excellent performance.

Further, in some embodiments of the present application, the first active material layer has a thickness of 7 µm to 80 µm.

Since the thickness of the first active material layer is set to be 7 µm to 80 µm within this range, the function of the first active material can be fully utilized and the battery miniaturization is facilitated.

Further optionally, in some embodiments of the present application, the first active material layer has a thickness of 15 µm to 50 µm.

Since the thickness of the first active material layer is limited to 15 µm to 50 µm within this range, the excellent property of reducing the probability of thermal runaway of the battery can be obtained.

Illustratively, in some embodiments of the present application, the thickness of the first active material layer is 20 µm, 25 µm, 30 µm, 35 µm, 40 µm, 45 µm, or 50 µm.

Further, in some embodiments of the present application, Dᵥ50 of particles contained in the first active material layer is 0.5 µm to 20 µm.

Within the above-mentioned particle size range, a first active material layer with good performance can be easily obtained.

Dᵥ50, as described above, means that the diameter of particles in the first active material layer that account for 50% of the total volume is greater than this value while the diameter of particles that account for the other 50% of the total volume is less than this value, and Dv50 represents the median particle size of powder.

Unless otherwise specified, the particle size distribution parameter Dv50 of the first active material determined by a particle size distribution measurement value in the present application is determined by a particle size analyzer-laser diffraction method. Specifically, reference can be made to the standard GB/T 19077-2016, and a laser diffraction scattering particle size analyzer is used for measurement according to the manufacturer's instructions.

Further optionally, the Dᵥ50 of the particles contained in the first active material layer is 0.6 µm to 19 µm.

Illustratively, the Dᵥ50of the particles contained in the first active material layeris 0.7 µm, 1.0 µm, 1.5 µm, 2 µm, 5 µm, 8 µm, 10 µm, or 15 µm.

Further, in some embodiments of the present application, the second active material has a gram capacity of 175 mAh/g to 250 mAh/g.

Since the gram capacity of the second active material is limited to 175 mAh/g to 250 mAh/g, it is beneficial to improve the battery capacity.

The gram capacity mentioned above is the capacity per unit mass of the second active material.

Unless otherwise specified, a gram capacity test method in the present application is as follows: assembling the positive and negative electrode plates dissembled from the battery cell into an electrode plate-lithium sheet button-type half battery and obtaining the button-type battery capacity by charging and discharging at a small rate, and then dividing the capacity by the mass of the electrode plate active material to obtain the gram capacity parameter.

Further optionally, in some embodiments of the present application, the second active material has a gram capacity of 176 mAh/g to 249 mAh/g.

Since the gram capacity of the second active material is limited to 176 mAh/g to 249 mAh/g, it is beneficial to improve the battery capacity and increase the cycling capacity retention rate of the battery.

Illustratively, the gram capacity of the second active material is 178 mAh/g, 190 mAh/g, 195 mAh/g, 200 mAh/g, 210 mAh/g, 220 mAh/g, 230 mAh/g, 240 mAh/g, or 250 mAh/g.

Further, in some embodiments of the present application, the second active material has a voltage plateau greater than or equal to 3.22V.

Since the voltage plateau of the second active material is limited to be greater than or equal to 3.22 V, it is beneficial to improve the battery capacity.

Further optionally, the second active material has a voltage plateau of 3.5 V to 3.9 V.

Since the voltage plateau of the second active material is limited to be greater than or equal to 3. 22 V, it is beneficial to improve the battery capacity.

Illustratively, in some embodiments of the present application, the second active material has a voltage plateau of 3.6 V, 3.7 V, 3.8 V, or 3.9 V.

Further, in some embodiments of the present application, the second active material includes a layered structural material.

The layered structural material has the property of high energy density, which is conducive to improving the battery capacity.

Further, in some optional embodiments of the present application, the layered structural material includes at least one of a layered ternary material, lithium cobalt oxide, and a lithium-rich manganese-based material.

The layered ternary material, lithium cobalt oxide, and lithium-rich manganese-based material all have the property of high energy density, which is conducive to improving the battery capacity.

Further, in some embodiments of the present application, the layered ternary material includes: Liₓ(NiₐCo_{b}Mn_{c})_{1-d}M_{d}O_{2-y}A_{y}, where 0≤a<0.65, 0≤b≤1, 0≤c≤1, 0≤d<1, 0≤y≤1, and 0.2≤x≤1.2.

Further, in some embodiments of the present application, a high-nickel ternary material includes: Liₓ(NiₐCo_{b}Mn_{c})_{1-d}MaO_{2-y}A_{y}, where 0.65≤a≤1, 0≤b≤1, 0≤c≤1, 0≤d<1, 0≤y≤1, and 0.2≤x≤1.2

It should be noted that the charging and discharging process of the battery is accompanied by deintercalation and consumption of Li, the molar content of Li varies as the state to which the battery is discharged varies. The above definition of x in the chemical formula above includes the molar content of Li in different charge-discharge states of the battery (the voltage of the battery is generally between 2 V and 5 V).

Further, in some embodiments of the present application, the lithium-rich manganese-based material includes: nLi₂MnO₃·(1-n)LiNi_{b}Mn_{(1-b-c)}Z_{c}O₂, where Z includes at least one of Na, Mg, Al, Ca, Ba, V, Zn, Ti, Fe, Co, Cr, Nb, W, Mo, Zr, Ta, and Hf; 0.1<n<1; 0<b<1; and 0<c≤0.2.

Further, in some embodiments of the present application, the second active material layer has a thickness of 7 µm to 67 µm.

Since the thickness of the second active material layer is set to be 7 µm to 67 µm, the properties of the second active material can be effectively utilized and the battery miniaturization is facilitated.

Further, in some embodiments of the present application, the second active material layer has a thickness of 15 µm to 50 µm.

Since the thickness of the second active material layer described above is further limited to be 15 µm to 50 µm, it is beneficial to further improve the battery capacity.

Illustratively, in some embodiments of the present application, the thickness of the second active material layer is 16 µm, 18 µm, 20 µm, 25 µm, 30 µm, 35 µm, 40 µm or 45 µm.

Further, in some embodiments of the present application, Dᵥ50 of particles contained in the second active material layer is 1 µm to 20 µm.

Since the Dᵥ50 of the particles contained in the second active material layer is set to be 1 µm to 20 µm within the above range, it is beneficial to form a second active material layer with good performance.

Dᵥ50, as described above, means that the diameter of particles in the second active material layer that account for 50% of the total volume is greater than this value while the diameter of particles that account for the other 50% of the total volume is less than this value, and Dv50 represents the median particle size of powder.

Unless otherwise specified, the particle size distribution parameter Dv50 of the second active material determined by a particle size distribution measurement value in the present application is determined by a particle size analyzer-laser diffraction method. Specifically, reference can be made to the standard GB/T 19077-2016, and a laser diffraction scattering particle size analyzer is used for measurement according to the manufacturer's instructions.

Further optionally, Dv50 of the particles contained in the second active material layer is 2 µm to 19 µm.

Illustratively, in some embodiments of the present application, Dᵥ50 of the particles contained in the second active material layer is 3 µm, 5 µm, 10 µm, 12 µm or 15 µm.

Further, in some embodiments of the present application, the conductive coating has a thickness of 0.1 µm to 2 µm.

Since the thickness of the conductive coating is set to be 0.1µm to 2µm, both the battery miniaturization and the function of the conductive coating can be balanced.

Further, in some embodiments of the present application, the conductive coating has a thickness of 0.5 µm to 1.5 µm.

The thickness of the conductive coating is further limited to 0.5 µm to 1.5 µm. A thickness less than 0.5 µm is not conducive to the effectiveness of the conductive coating; a thickness greater than 1.5 µm occupies too much space and is not conducive to the battery miniaturization.

Illustratively, in some embodiments of the present application, the thickness of the conductive coating is 0.5 µm, 0.6 µm, 0.7 µm, 0.8 µm, 0.9 µm, 1.0 µm, 1.1 µm, 1.2 µm, 1.3 µm, 1.4 µm, or 1.5 µm.

Further, in some embodiments of the present application, the conductive coating further includes a conductive agent and a binder.

The conductive coating has good conductivity and adhesion. The conductivity is mainly achieved through the conductive agent, which helps to reduce the negative electrode impedance and improve the negative electrode lithium intercalation and deintercalation activity, and the corresponding battery has higher capacity, power and low-temperature performance; the adhesion is mainly achieved through the binder, which helps to connect the first active material layer and the current collector more firmly and reduce the shedding of active materials during the electrode plate slitting and winding process, and facilitates long-term reliability.

Further, in some optional embodiments of the present application, the conductive coating includes, by mass percentage, 40% to 60% of the conductive agent and 40% to 60% of the binder.

Under the above-mentioned ratio range, a conductive coating with good conductivity and good adhesion performance can be obtained.

Further optionally, in some optional embodiments of the present application, the conductive coating includes, by mass percentage, 41% to 59% of the conductive agent and 41% to 59% of the binder.

Illustratively, in some embodiments of the present application, the conductive coating includes, by mass percentage: 45% of the conductive agent and 55% of the binder; or the conductive coating includes 48% of the conductive agent and 52% of the binder; or the conductive coating includes 53% of the conductive agent and 47% of the binder.

Further, in some embodiments of the present application, the conductive coating further includes a neutralizing agent.

Adding the neutralizing agent to the conductive coating to adjust the pH can improve the corrosion resistance of a positive electrode current collector (aluminum foil). Moreover, the neutralizing agent can form positive and negative charge attraction between the current collector and the first active material layer, further enhancing the bonding between the first active material layer and the current collector.

Further optionally, in some embodiments of the present application, the conductive coating includes, by mass percentage, 40% to 55% of the conductive agent, 40% to 55% of the binder, and 1 to 10% of the neutralizing agent.

Under the above-mentioned ratio range, a conductive coating with excellent conductivity, excellent adhesion and good corrosion resistance of the current collector can be obtained.

Further optionally, in some embodiments of the present application, the conductive coating includes, by mass percentage, 42% to 50% of the conductive agent, 42% to 50% of the binder, and 2% to 8% of the neutralizing agent.

Illustratively, in some embodiments of the present application, the conductive coating includes, by mass percentage, 50% of the conductive agent, 43% of the binder and 7% of the neutralizing agent; or the conductive coating includes 45% of the conductive agent, 45% of the binder and 10% of the neutralizing agent; or the conductive coating includes 48% of the conductive agent, 45% of the binder and 7% of the neutralizing agent.

Further, in some optional embodiments of the present application, the conductive agent includes at least one of carbon black, carbon nanotubes or graphene.

At least one of the carbon black, carbon nanotubes or graphene, used as the conductive agent, has high electrical conductivity, which enables the conductive coating to achieve high conductivity and helps the battery to show a higher capacity.

Illustratively, in some embodiments of the present application, the conductive agent is selected from any one of carbon black, carbon nanotubes or graphene; or the conductive agent is selected from a mixture of carbon black and carbon nanotubes, in which the two can be mixed in any proportion; or the conductive agent is selected from a mixture of carbon nanotubes and graphene, in which the two can be mixed in any proportion; or the conductive agent is selected from a mixture of carbon black and graphene, in which the two can be mixed in any proportion; or the conductive agent is selected from a mixture of carbon black, carbon nanotubes and graphene.

Further, in some optional embodiments of the present application, the binder includes at least one of polyacrylic acid, polyvinyl alcohol, sodium carboxymethyl cellulose, polyvinylidene difluoride, or styrene-butadiene rubber.

At least one of polyacrylic acid, polyvinyl alcohol, sodium carboxymethyl cellulose, polyvinylidene fluoride or styrene-butadiene rubber is used as a binder with high adhesion, which enables the conductive coating to achieve high adhesion, facilitates a firmer connection between the first active material layer and the current collector, reduces the shedding of active materials during the electrode plate slitting and winding process, and improves long-term reliability.

Illustratively, in some embodiments of the present application, the binder is selected from any one of polyacrylic acid, polyvinyl alcohol, sodium carboxymethyl cellulose, polyvinylidene fluoride or styrene-butadiene rubber; or the binder is selected from a mixture of polyacrylic acid and polyvinyl alcohol; or the binder is selected from a mixture of sodium carboxymethyl cellulose and polyvinylidene fluoride; or the binder is selected from a mixture of polyvinylidene fluoride and styrene-butadiene rubber; and the raw materials in the above mixtures can be mixed in any proportion.

Further, in some optional embodiments of the present application, the neutralizing agent includes at least one of calcium hydroxide or lithium hydroxide.

At least one of calcium hydroxide and lithium hydroxide, used as the neutralizing agent, can effectively adjust the pH of the conductive coating, thereby enhancing the bonding force between the first active material layer and the current collector through electrostatic attraction.

Illustratively, in some embodiments of the present application, the neutralizing agent is selected from either calcium hydroxide or lithium hydroxide; or the neutralizing agent is selected from a mixture of calcium hydroxide and lithium hydroxide, in which the two raw materials can be mixed in any proportion.

Some specific examples are listed below to better illustrate the present application.

### [Preparation of Positive Electrode Plate (I): Olivine structural material]

### Step S1: Preparation of a conductive coating slurry:

A neutralizing agent, a conductive agent and a binder were mixed in a specific ratio, and then water was added and stirred to form a slurry.

### Step S2: Preparation of a first negative active material slurry:

By mass percentage, 97.5% of a first active material (olivine structural material), 0.7% of conductive carbon black, and1.8% of polyvinylidene fluoride (PVDF)were uniformly mixed in an N-methylpyrrolidone (NMP) solvent system, and stirred to obtain a slurry.

### Step S3: Preparation of a second active material slurry:

By mass percentage, 96% of a second active material (layered ternary material), 2% of conductive carbon black, 0.5% of flake conductive carbon, and 1.5% of polyvinylidene fluoride (PVDF) were mixed uniformly in an N-methylpyrrolidone (NMP) solvent system, and stirred to obtain a slurry.

### Step S4: Preparation of a positive electrode plate:

The slurries obtained in step S1, step S2 and step S3 were sequentially coated on a current collector aluminum foil by extrusion coating to form a three-layer coating. The first active material had a coating weight of 150 mg/1540.25 mm² and a thickness of 30 µm. The second active material had a coating weight of 160 mg/1540.25 mm², and a thickness of 40 µm.

### Examples 1 to 21

A positive electrode plate was provided, which was prepared by the above-mentioned method of preparation of positive electrode plate (I). The material selection, preparation parameters, and performance parameters of each embodiment are shown in Tables 1 to 3.

### Comparative Example 1

A positive electrode plate was provided, which was prepared by a method similar to the above-mentioned method of preparation of positive electrode plate described above, except that: in step S4, the slurries obtained in step S2 and step S3 were first mixed in a mass ratio of 1:1 to obtain a mixed slurry, and then the slurry obtained in step S1 and the mixed slurry were sequentially coated to form two layers of coating.

The material selection, preparation parameters, and performance parameters of Comparative Example 1 are shown in Tables 1 to 3.

### Comparative Example 2

A positive electrode plate was provided, which was prepared by a method similar to the above-mentioned method of preparation of positive electrode plate, except that: in step S4, the slurry obtained in step S1 was not coated; only the slurries obtained in step S2 and step S3 were coated sequentially to form two layers of coating.

The material selection, preparation parameters, and performance parameters of Comparative Example 2 are shown in Tables 1 to 3.

### Comparative Example 3

A positive electrode plate was provided, which was prepared by a method similar to the above-mentioned method of preparation of positive electrode plate, except that: in step S4, the slurry obtained in step S1 was not coated; only the slurries obtained in step S3 and step S2 were coated sequentially to form two layers of coating.

The material selection, preparation parameters, and performance parameters of Comparative Example 3 are shown in Tables 1 to 3.

### [Preparation of Lithium-ion Battery]:

A lithium-ion battery was prepared using the positive electrode plate provided in each of the aforementioned examples and comparative examples; and the performance of the lithium-ion battery was tested.

### (1) Preparation of a lithium-ion battery:

The positive electrode plate provided in each of the aforementioned examples and comparative examples was combined with a negative electrode plate, followed by injection of an electrolyte and encapsulation to obtain a battery.

### Preparation of a negative electrode plate:

95.5wt% of graphite, 1.2wt% of conductive carbon black, 1.8wt% of styrene-butadiene rubber (SBR) and 1.5wt% of sodium carboxymethyl cellulose (CMC) were mixed, added with deionized water, and then stirred to obtain a slurry. The slurry was then coated on a negative electrode current collector copper foil to obtain the negative electrode plate. The coating thickness was 50 µm.

The electrolyte was a solution of 1 mol/L of LiPF₆ in ethylene carbonate (EC), diethyl carbonate (DEC) and dimethyl carbonate (DMC) in a volume ratio of 1:1:1.

### (2) Battery performance testing

1. Nail penetration test method: charging the battery cell to 100% stage of charge, restraining the battery cell by a steel fixture having a hole in the middle, using a steel nail with a diameter of 2 mm to vertically penetrate the battery cell at a speed of 10 mm/s at 25°C; and standing for 30 min to observe whether the battery cell is on fire or not.
2. Hot box test conditions: charging the battery cell to 100% state of charge, restraining the battery cell by a steel fixture, placing the battery cell in an oven and then standing, where the oven starting temperature is 130°C, and confirming the state of the battery cell after standing for 1 hour; if the battery cell does not fail after standing for 1 hour, increasing the temperature at 5°C/min, and standing for 30 min every time the temperature increases by 5°C, until thermal runaway occurs in the battery cell.
3. Capacity test conditions: 1. The battery cell was subjected to standing at 25°C. 2. The battery cells was charged with a 0.33C constant current to a cut-off voltage (4.25V for that contains the high-nickel ternary material and 4.4V for that does not contain the high-nickel ternary material), then switched to constant voltage charging. 3. Charging was stop after the current was reduced to 0.05C. 4. The battery cell was subjected to standing for 30 min. 5. The battery cell was discharged with a 0.33C constant current to a cut-off voltage (such as 2.5V). 6. The battery cell was subjected to standing for 30 min; 7. Steps 2 to 6 were repeated for three times, and the average value of the discharge capacity was taken as the capacity.
4. Capacity retention rate test conditions: 1. The battery cell was subjected to standing at 25°C. 2. The battery cells was charged with a 0.33C constant current to a cut-off voltage (4.25V for that contains the high-nickel ternary material and 4.4V for that does not contain the high-nickel ternary material), then switched to constant voltage charging. 3. Charging was stop after the current was reduced to 0.05C. 4. The battery cell was subjected to standing for 30 min. 5. The battery cell was discharged with a 0.33C constant current to a cut-off voltage (such as 2.5V); 6. The battery cell was subjected to standing for 30 min. 7. Steps 2 to 6 were repeated for 200 times, and the ratio of the discharge capacity after 500 cycles to the discharge capacity at the first cycle was taken as the capacity retention rate.

The test results are as shown in Table 4.

**Table 1**

| | Coating method | Conductive coating composition(wt%) | Conductive coating layer thickness (µm) |
|---|---|---|---|
| Example 1 | Multi-layer coating | 42% of carbon black + 55% of polyacrylic acid + 3% of calcium hydroxide | 0.1 |
| Example 2 | Multi-layer coating | 42% of carbon black + 55% of polyacrylic acid + 3% of calcium hydroxide | 1 |
| Example 3 | Multi-layer coating | 42% of carbon black + 55% of polyacrylic acid + 3% of calcium hydroxide | 1 |
| Example 4 | Multi-layer coating | 42% of carbon black + 55% of polyacrylic acid + 3% of calcium hydroxide | 1 |
| Example 5 | Multi-layer coating | 42% of carbon black + 55% of polyacrylic acid + 3% of calcium hydroxide | 2 |
| Example 6 | Multi-layer coating | 42% of carbon black + 55% of polyacrylic acid + 3% of calcium hydroxide | 2 |
| Example 7 | Multi-layer coating | 42% of carbon black + 55% of polyacrylic acid + 3% of calcium hydroxide | 2 |
| Example 8 | Multi-layer coating | 42% of carbon black + 55% of polyacrylic acid + 3% of calcium hydroxide | 2 |
| Example 9 | Multi-layer coating | 42% of carbon black + 55% of polyacrylic acid + 3% of calcium hydroxide | 1 |
| Example 10 | Multi-layer coating | 42% of carbon black + 55% of polyacrylic acid + 3% of calcium hydroxide | 1 |
| Example 11 | Multi-layer coating | 42% of carbon black + 55% of polyacrylic acid + 3% of calcium hydroxide | 0.1 |
| Example 12 | Multi-layer coating | 42% of carbon black + 55% of polyacrylic acid + 3% of calcium hydroxide | 1 |
| Example 13 | Multi-layer coating | 42% of carbon nanotube + 55% of polyacrylic acid + 3% of calcium hydroxide | 0.5 |
| Example 14 | Multi-layer coating | 42% of graphene + 55% of polyacrylic acid + 3% of calcium hydroxide | 0.5 |
| Example 15 | Multi-layer coating | 42% of carbon black + 55% of polyacrylic acid + 3% of calcium hydroxide | 0.5 |
| Example 16 | Multi-layer coating | 42% of carbon black + 55% of polyacrylic acid + 3% of calcium hydroxide | 1.5 |
| Example 17 | Multi-layer coating | 42% of carbon black + 55% of polyacrylic acid + 3% of calcium hydroxide | 1.5 |
| Example 18 | Multi-layer coating | 42% of carbon black + 55% of polyacrylic acid + 3% of calcium hydroxide | 1.5 |
| Example 19 | Multi-layer coating | 42% of carbon black + 55% of polyacrylic acid + 3% of calcium hydroxide | 0.2 |
| Example 20 | Multi-layer coating | 42% of carbon black + 55% of polyacrylic acid + 3% of calcium hydroxide | 1.2 |
| Example 21 | Multi-layer coating | 42% of carbon black + 55% of polyacrylic acid + 3% of calcium hydroxide | 1.9 |
| Comparative Example 1 | Physical mixing | 42% of carbon black + 55% of polyacrylic acid + 3% of calcium hydroxide | 1 |
| Comparative Example 2 | Multi-layer coating | - | 0 |
| Comparative Example 3 | Multi-layer coating | 42% of carbon black + 55% of polyacrylic acid + 3% of calcium hydroxide | 0.1 |

**Table 2**

| | First active material layer | Nail penetration test for first active material layer | Hot box test temperature (°C) of first active material layer | Thickness (µm) of first active material layer | Average particle size Dᵥ50 (µm) of first active material |
|---|---|---|---|---|---|
| Example 1 | Li_{1.00}Mn_{0.22}Fe_{0.78}PO₄ | No fire | 175 | 15 | 1 |
| Example 2 | Li_{1.00}Mn_{0.22}Fe_{0.78}PO₄ | No fire | 175 | 19 | 1 |
| Example 3 | Li_{1.00}Mn_{0.22}Fe_{0.78}PO₄ | No fire | 175 | 24 | 1 |
| Example 4 | Li_{1.00}Mn_{0.22}Fe_{0.78}PO₄ | No fire | 175 | 37 | 1 |
| Example 5 | Li_{1.00}Mn_{0.22}Fe_{0.78}PO₄ | No fire | 175 | 50 | 1 |
| Example 6 | Li_{1.00}Mn_{0.22}Fe_{0.78}PO₄ | No fire | 175 | 75 | 1 |
| Example 7 | Li_{1.00}Mn_{0.22}Fe_{0.78}PO₄ | No fire | 175 | 80 | 1 |
| Example 8 | Li_{1.00}Mn_{0.22}Fe_{0.78}PO₄ | No fire | 175 | 37 | 1 |
| Example 9 | Li_{1.00}Mn_{0.22}Fe_{0.78}PO₄ | No fire | 175 | 19 | 1 |
| Example 10 | LiFePO₄ | No fire | 175 | 19 | 1.1 |
| Example 11 | LiFePO₄ | No fire | 175 | 19 | 1.1 |
| Example 12 | LiFePO₄ | No fire | 175 | 15 | 1.1 |
| Example 13 | LiFePO₄ | No fire | 175 | 50 | 1.1 |
| Example 14 | LiFePO₄ | No fire | 175 | 50 | 1.1 |
| Example 15 | LiFePO₄ | No fire | 175 | 50 | 1.1 |
| Example 16 | LiFePO₄ | No fire | 175 | 20 | 1.1 |
| Example 17 | LiFePO₄ | No fire | 175 | 20 | 1.1 |
| Example 18 | LiFePO₄ | No fire | 175 | 20 | 1.1 |
| Example 19 | LiFePO₄ | No fire | 175 | 15 | 1.1 |
| Example 20 | LiFePO₄ | No fire | 175 | 15 | 1.1 |
| Example 21 | LiFePO₄ | No fire | 175 | 15 | 1.1 |
| Comparative Example 1 | Li_{1.00}Mn_{0.22}Fe_{0.78}PO₄ | No fire | 175 | 19 | 1 |
| Comparative Example 2 | Li_{1.00}Mn_{0.22}Fe_{0.78}PO₄ | No fire | 175 | 19 | 1 |
| Comparative Example 3 | Li_{1.00}Ni_{0.54}Co_{0.14}Mn_{0.32}O₂ | Fire | 155 | 47 | 3.7 |

**Table 3**

| | Second active material layer | Gram capacity (mAh/g) of second active material | Plateau voltage (V) of second active material | Thickness (µm) of second active material | Average particle size Dᵥ50 (µm) of second active material |
|---|---|---|---|---|---|
| Example 1 | Li_{1.00}Ni_{0.54}Co_{0.14}Mn_{0.32}O₂ | 197 | 3.74 | 47 | 3.7 |
| Example 2 | Li_{1.00}Ni_{0.54}Co_{0.14}Mn_{0.32}O₂ | 197 | 3.74 | 34 | 3.7 |
| Example 3 | Li_{1.00}Ni_{0.54}Co_{0.14}Mn_{0.32}O₂ | 197 | 3.74 | 44 | 3.7 |
| Example 4 | Li_{1.00}Ni_{0.54}Co_{0.14}Mn_{0.32}O₂ | 197 | 3.74 | 30 | 3.7 |
| Example 5 | Li_{1.00}Ni_{0.54}Co_{0.14}Mn_{0.32}O₂ | 197 | 3.74 | 17 | 3.7 |
| Example 6 | Li_{1.00}Ni_{0.54}Co_{0.14}Mn_{0.32}O₂ | 197 | 3.74 | 25 | 3.7 |
| Example 7 | Li_{1.00}Ni_{0.54}Co_{0.14}Mn_{0.32}O₂ | 197 | 3.74 | 16 | 3.7 |
| Example 8 | Li_{1.00}Ni_{0.91}Co_{0.05}Mn_{0.04}O₂ | 215 | 3.63 | 30 | 9 |
| Example 9 | Li_{1.00}Ni_{0.91}Co_{0.05}Mn_{0.04}O₂ | 215 | 3.63 | 34 | 9 |
| Example 10 | Li_{1.00}Ni_{0.91}Co_{0.05}Mn_{0.04}O₂ | 215 | 3.63 | 59 | 9 |
| Example 11 | Li_{1.00}Ni_{0.91}Co_{0.05}Mn_{0.04}O₂ | 215 | 3.63 | 59 | 9 |
| Example 12 | Li_{1.00}Ni_{0.91}Co_{0.05}Mn_{0.04}O₂ | 215 | 3.63 | 47 | 9 |
| Example 13 | Li_{1.00}Ni_{0.91}Co_{0.05}Mn_{0.04}O₂ | 215 | 3.63 | 30 | 9 |
| Example 14 | Li_{1.00}Ni_{0.91}Co_{0.05}Mn_{0.04}O₂ | 215 | 3.63 | 30 | 9 |
| Example 15 | Li_{1.00}Ni_{0.91}Co_{0.05}Mn_{0.04}O₂ | 215 | 3.63 | 30 | 9 |
| Example 16 | Li_{1.00}Ni_{0.91}Co_{0.05}Mn_{0.04}O₂ | 215 | 3.63 | 40 | 9 |
| Example 17 | Li_{1.00}Ni_{0.91}Co_{0.05}Mn_{0.04}O₂ | 215 | 3.63 | 40 | 9 |
| Example 18 | Li_{1.00}Ni_{0.91}Co_{0.05}Mn_{0.04}O₂ | 215 | 3.63 | 40 | 9 |
| Example 19 | Li_{1.00}Ni_{0.91}Co_{0.05}Mn_{0.04}O₂ | 215 | 3.63 | 15 | 9 |
| Example 20 | Li_{1.00}Ni_{0.91}Co_{0.05}Mn_{0.04}O₂ | 215 | 3.63 | 15 | 9 |
| Example 21 | Li_{1.00}Ni_{0.91}Co_{0.05}Mn_{0.04}O₂ | 215 | 3.63 | 15 | 9 |
| Comparative Example 1 | Li_{1.00}Ni_{0.54}Co_{0.14}Mn_{0.32}O₂ | 197 | 3.74 | 34 | 3.7 |
| Comparative Example 2 | Li_{1.00}Ni_{0.54}Co_{0.14}Mn_{0.32}O₂ | 197 | 3.74 | 34 | 3.7 |
| Comparative Example 3 | Li_{1.00}Mn_{0.22}Fe_{0.78}PO₄ | 144 | 3.6 | 15 | 1 |

**Table 4**

| | Battery capacity/Ah | Capacity retention ratio after 500 cycles (%) | Nail penetration manifestation | Internal short-circuit manifestation | Battery hot box test temperature (°C) |
|---|---|---|---|---|---|
| Example 1 | 157 | 97 | No fire | No fire | 175 |
| Example 2 | 128 | 95 | No fire | No fire | 173 |
| Example 3 | 162 | 93 | No fire | No fire | 173 |
| Example 4 | 146 | 90 | No fire | No fire | 165 |
| Example 5 | 132 | 88 | No fire | No fire | 160 |
| Example 6 | 198 | 88 | No fire | No fire | 160 |
| Example 7 | 180 | 87 | No fire | No fire | 158 |
| Example 8 | 158 | 91 | No fire | No fire | 165 |
| Example 9 | 142 | 95 | No fire | No fire | 170 |
| Example 10 | 221 | 98 | No fire | No fire | 175 |
| Example 11 | 221 | 96 | No fire | No fire | 175 |
| Example 12 | 177 | 95 | No fire | No fire | 175 |
| Example 13 | 166 | 91 | No fire | No fire | 162 |
| Example 14 | 164 | 91 | No fire | No fire | 162 |
| Example 15 | 160 | 91 | No fire | No fire | 162 |
| Example 16 | 129 | 93 | No fire | No fire | 169 |
| Example 17 | 128 | 93 | No fire | No fire | 169 |
| Example 18 | 129 | 93 | No fire | No fire | 169 |
| Example 19 | 127 | 91 | No fire | No fire | 165 |
| Example 20 | 127 | 91 | No fire | No fire | 165 |
| Example 21 | 129 | 91 | No fire | No fire | 165 |
| Comparative Example 1 | 125 | 82 | Fire | Fire | 155 |
| Comparative Example 2 | 120 | 92 | No fire | No fire | 167 |
| Comparative Example 3 | 120 | 89 | No fire | No fire | 160 |

As can be seen from the above test results in Table 4:
In the solutions of Examples 1 to 21 of the present application, the battery did not catch fire in the nail penetration test, and did not catch fire when in internal short-circuits. The battery capacity ranged from 127 Ah to 221 Ah.

However, the solution of Comparative Example 1 cannot satisfy the condition that the battery does not catch fire in both nail penetration and internal short-circuits. For Comparative Examples 2 and 3, the battery capacity was only 120 Ah.

Further, compared with Comparative Examples 2 and 3, the battery hot box test temperature in Example 1 was higher, which showed that Example 1 is more conducive to reducing the probability of thermal runaway of the battery.

Further, compared with Comparative examples 1 to 3, the battery in Example 1 had a higher capacity retention rate after 500 cycles, showing better cycle stability.

It can thus be shown that the solutions of Examples 1 to 21 of the present application can effectively reduce the probability of thermal runaway of the battery while improving the battery capacity.

Further, from the comparison between Example 2 and Comparative Example 1, it can be seen that when the olivine structural material was selected as the first active material, the layered ternary material was selected as the second active material, the first active material layer and the second active material layer were arranged in layer and had a specific positional relationship, the battery capacity was effectively improved and the probability of thermal runaway of the battery was reduced as compared with the physical mixing method of the first active material and the second active material.

Further, from the comparison between Example 2 and Comparative Example 2, it can be seen that the conductive coating arranged on the surface of the current collector helps to reduce impedance of the positive electrode and enhance lithium intercalation and deintercalation activity of the positive electrode, thereby helping the battery to show a higher capacity.

Further, from the comparison between Example 1 and Comparative Example 3, it can be seen that the battery hot box test temperature in Example 1 was higher, and the probability of thermal runaway of the battery in Example 1 was reduced. Further, in Example 1, the battery capacity was increased, and the capacity retention rate after 500 cycles was higher, showing better capacity performance and cycle stability.

### [Preparation of Positive Electrode Plate (II): Spinel structural material]

### Step S1: Preparation of a conductive coating slurry:

A neutralizing agent, a conductive agent and a binder were mixed in a specific ratio, and then water was added and stirred to form a slurry.

### Step S2: Preparation of a first negative active material slurry:

By mass percentage, 94% of a first active material (spinel structural material), 2.5% of conductive carbon black, 1% of graphene and 2.5% of polyvinylidene fluoride (PVDF) were uniformly mixed in an N-methylpyrrolidone (NMP) solvent system, and stirred to obtain a slurry.

### Step S3: Preparation of a second active material slurry:

By mass percentage, 96% of a second active material (layered ternary material), 2% of conductive carbon black, 0.5% of flake conductive carbon, and 1.5% of polyvinylidene fluoride (PVDF) were mixed uniformly in an N-methylpyrrolidone (NMP) solvent system, and stirred to obtain a slurry.

### Step S4: Preparation of a positive electrode plate:

The slurries obtained in step S1, step S2 and step S3 were sequentially coated on a current collector aluminum foil by extrusion coating to form a three-layer coating. The first active material had a coating weight of 150 mg/1540.25 mm² and a thickness of 30 µm. The second active material had a coating weight of 160 mg/1540.25 mm², and a thickness of 40 µm.

### Examples 22 to 30

A positive electrode plate was provided, which was prepared by the above-mentioned method of preparation of positive electrode plate (II). The material selection, preparation parameters, and performance parameters of each embodiment are shown in Tables 5 to 7.

### Comparative Example 4

A positive electrode plate was provided, which was prepared by a method similar to the above-mentioned method of preparation of positive electrode plate described above, except that: in step S4, the slurries obtained in step S2 and step S3 were first mixed in a mass ratio of 1:1 to obtain a mixed slurry, and then the slurry obtained in step S1 and the mixed slurry were sequentially coated to form two layers of coating.

The material selection, preparation parameters, and performance parameters of Comparative Example 1 are shown in Tables 5 to 7.

### Comparative Example 5

A positive electrode plate was provided, which was prepared by a method similar to the above-mentioned method of preparation of positive electrode plate, except that: in step S4, the slurry obtained in step S1 was not coated; only the slurries obtained in step S2 and step S3 were coated sequentially to form two layers of coating.

The material selection, preparation parameters, and performance parameters of Comparative Example 2 are shown in Tables 5 to 7.

A lithium-ion battery was prepared using the positive electrode plate provided in each of the aforementioned Examples 22 to 30 and Comparative examples 4 to 5; and the performance of the lithium-ion battery was tested.

The preparation method and the testing method are the same as the aforementioned preparation method and testing method of the lithium-ion battery.

The test results are as shown in Table 8.

**Table 5**

| | Coating method | Conductive coating composition (wt%) | Conductive coating layer thickness (µm) | Average particle size (µm) of conductive coating laver |
|---|---|---|---|---|
| Example 22 | Multi-layer coating | 42% of carbon black + 55% of polyacrylic acid + 3% of calcium hydroxide | 1 | 0.2 |
| Example 23 | Multi-layer coating | 42% of carbon black + 55% of polyacrylic acid + 3% of calcium hydroxide | 0.1 | 0.2 |
| Example 24 | Multi-layer coating | 42% of carbon black + 55% of polyacrylic acid + 3% of calcium hydroxide | 2 | 0.2 |
| Example 25 | Multi-layer coating | 42% of carbon black + 55% of polyacrylic acid + 3% of calcium hydroxide | 1 | 0.2 |
| Example 26 | Multi-layer coating | 42% of carbon black + 55% of polyacrylic acid + 3% of calcium hydroxide | 1 | 0.2 |
| Example 27 | Multi-layer coating | 42% of carbon black + 55% of polyacrylic acid + 3% of calcium hydroxide | 1 | 0.2 |
| Example 28 | Multi-layer coating | 42% of carbon nanotube + 55% of polyacrylic acid + 3% of calcium hydroxide | 1 | 0.2 |
| Example 29 | Multi-layer coating | 42% of carbon black + 55% of polyacrylic acid + 3% of calcium hydroxide | 1 | 0.2 |
| Example 30 | Multi-layer coating | 42% of carbon black + 55% of polyacrylic acid + 3% of calcium hydroxide | 1 | 0.2 |
| Comparative Example 4 | Physical mixing | 42% of carbon black + 55% of polyacrylic acid + 3% of calcium hydroxide | 1 | 0.2 |
| Comparative Example 5 | Multi-layer coating | - | 0 | 0.2 |

**Table 6**

| | First active material layer | Nail penetration test for first active material layer | Hot box test temperature (°C) of first active material layer | Thickness (µm) of first active material layer | Average particle size Dᵥ50 (µm) of first active material |
|---|---|---|---|---|---|
| Example 22 | Li₄Ti₅O₁₂ | No fire | 170 | 31 | 2.1 |
| Example 23 | Li₄Ti₅O₁₂ | No fire | 170 | 31 | 2.1 |
| Example 24 | Li₄Ti₅O₁₂ | No fire | 170 | 31 | 2.1 |
| Example 25 | Li₄Ti₅O₁₂ | No fire | 170 | 13 | 2.1 |
| Example 26 | Li₄Ti₅O₁₂ | No fire | 170 | 7 | 2.1 |
| Example 27 | Li₄Ti₅O₁₂ | No fire | 170 | 67 | 2.1 |
| Example 28 | Li₄Ti₅O₁₂ | No fire | 170 | 7 | 2.1 |
| Example 29 | Li₄Ti₅O₁₂ | No fire | 170 | 31 | 2.1 |
| Example 30 | Li₄Ti₅O₁₂ | No fire | 170 | 67 | 2.1 |
| Comparative Example 4 | Li₄Ti₅O₁₂ | No fire | 170 | 31 | 2.1 |
| Comparative Example 5 | Li₄Ti₅O₁₂ | No fire | 170 | 31 | 2.1 |

**Table 7**

| | Second active material layer | Gram capacity (mAh/g) of second active material | Plateau voltage (V) of second active material | Thickness (µm) of second active material | Average particle size Dᵥ50 (µm) of second active material |
|---|---|---|---|---|---|
| Example 22 | LiCoO₂ | 187 | 3.89 | 31 | 15 |
| Example 23 | LiCoO₂ | 187 | 3.89 | 31 | 15 |
| Example 24 | LiCoO₂ | 187 | 3.89 | 31 | 15 |
| Example 25 | LiCoO₂ | 187 | 3.89 | 50 | 15 |
| Example 26 | LiCoO₂ | 187 | 3.89 | 67 | 15 |
| Example 27 | LiCoO₂ | 187 | 3.89 | 7 | 15 |
| Example 28 | Li_{1.00}Ni_{0.54}Co_{0.14}Mn_{0.32}O₂ | 197 | 3.74 | 67 | 3.7 |
| Example 29 | Li_{1.00}Ni_{0.54}Co_{0.14}Mn_{0.32}O₂ | 197 | 3.74 | 31 | 3.7 |
| Example 30 | Li_{1.00}Ni_{0.54}Co_{0.14}Mn_{0.32}O₂ | 197 | 3.74 | 7 | 3.7 |
| Comparative Example 4 | LiCoO₂ | 187 | 3.89 | 31 | 15 |
| Comparative Example 5 | LiCoO₂ | 187 | 3.89 | 31 | 15 |

**Table 8**

| | Battery capacity/Ah | Capacity retention ratio after 500 cycles (%) | Nail penetration manifestation | Internal short-circuit manifestation | Battery hot box test temperature (°C) |
|---|---|---|---|---|---|
| Example 22 | 151 | 92 | No fire | No fire | 177 |
| Example 23 | 151 | 88 | No fire | No fire | 177 |
| Example 24 | 151 | 96 | No fire | No fire | 177 |
| Example 25 | 152 | 92 | No fire | No fire | 172 |
| Example 26 | 181 | 92 | No fire | No fire | 172 |
| Example 27 | 176 | 98 | No fire | No fire | 170 |
| Example 28 | 192 | 90 | No fire | No fire | 172 |
| Example 29 | 156 | 88 | No fire | No fire | 177 |
| Example 30 | 178 | 92 | No fire | No fire | 172 |
| Comparative Example 4 | 151 | 75 | Fire | No fire | 177 |
| Comparative Example 5 | 145 | 84 | No fire | No fire | 177 |

As can be seen from the above test results in Table 8:
In the solutions of Examples 22 to 30 of the present application, the battery did not catch fire in the nail penetration test, and did not catch fire when in internal short-circuits. The battery capacity ranged from 151 Ah to 192 Ah.

However, part of the solution of Comparative Example 4 cannot satisfy the condition that the battery does not catch fire in both nail penetration and internal short-circuits. For Comparative Example 5, the battery capacity was only 145 Ah.

It can thus be shown that materials used in the solutions of Examples 22 to 30 of the present application can effectively reduce the probability of thermal runaway of the battery while improving the battery capacity.

Further, from the comparison between Example 22 and Comparative Example 4, it can be seen that when the spinel structural material was selected as the first active material, the layered ternary material was selected as the second active material, the first active material layer and the second active material layer were arranged in layer and had a specific positional relationship as in Example 22; the probability of thermal runaway of the battery was reduced effectively as compared with the physical mixing method of the first active material and the second active material in Comparative Example 4.

Further, from the comparison between Example 22 and Comparative Example 5, it can be seen that when the spinel structural material was selected as the first active material, lithium cobalt oxide was selected as the second active material, the conductive coating arranged on the surface of the current collector as in Example 22 helps to reduce impedance of the positive electrode and enhance lithium intercalation and deintercalation activity of the positive electrode, thereby helping the battery to show a higher capacity.

Compared with Comparative examples 4 and 5, batteries in Examples 22 to 30 of the present application have a higher capacity retention rate after 500 cycles, showing better cycle stability.

### [Preparation of Positive Electrode Plate (III): lithium vanadium phosphate, LiMn₂O₄ and Li₂MnNiO₄]

### Examples 31 to 35

A positive electrode plate was provided, which was prepared by the above-mentioned method of preparation of positive electrode plate (II). The material selection, preparation parameters, and performance parameters in Examples 31 to 35 are shown in Tables 9 to 11.

A lithium-ion battery was prepared using the positive electrode plate provided in each of Examples 31 to 35 mentioned above; and the performance of the lithium-ion battery was tested.

The preparation method and the testing method are the same as the aforementioned preparation method and testing method of the lithium-ion battery.

The test results are as shown in Table 12.

**Table 9**

| | Coating method | Conductive coating composition (wt%) | Conductive coating layer thickness (µm) |
|---|---|---|---|
| Example 31 | Multi-layer coating | 42% of carbon black + 55% of polyacrylic acid + 3% of calcium hydroxide | 1.5 |
| Example 32 | Multi-layer coating | 42% of carbon black + 55% of polyacrylic acid + 3% of calcium hydroxide | 1.5 |
| Example 33 | Multi-layer coating | 42% of carbon black + 55% of polyacrylic acid + 3% of calcium hydroxide | 1.5 |
| Example 34 | Multi-layer coating | 42% of carbon black + 55% of polyacrylic acid + 3% of calcium hydroxide | 1.5 |
| Example 35 | Multi-layer coating | 42% of carbon black + 55% of polyacrylic acid + 3% of calcium hydroxide | 1.5 |

**Table 10**

| | First active material layer | Nail penetration test for first active material layer | Hot box test temperature (°C) of first active material layer | Thickness (µm) of first active material layer | Average particle size Dᵥ50 (µm) of first active material |
|---|---|---|---|---|---|
| Example 31 | LiVPO₄ | No fire | 175 | 15 | 1.1 |
| Example 32 | LiVPO₄ | No fire | 175 | 67 | 1.1 |
| Example 33 | LiVPO₄ | No fire | 175 | 67 | 1.1 |
| Example 34 | LiMn₂O₄ | No fire | 160 | 15 | 1.1 |
| Example 35 | Li₂MnNiO₄ | No fire | 160 | 15 | 1.1 |

**Table 11**

| | Second active material layer | Gram capacity (mAh/g) of second active material | Plateau voltage (V) of second active material | Thickness (µm) of second active material | Average particle size Dᵥ50 of second active material (µm) |
|---|---|---|---|---|---|
| Example 31 | Li_{1.00}Ni_{0.54}Co_{0.14} Mn_{0.32}O₂ | 215 | 3.74 | 15 | 9 |
| Example 32 | Li_{1.00}Ni_{0.54}Co_{0.14} Mn_{0.32}O₂ | 215 | 3.74 | 7 | 9 |
| Example 33 | 0.2Li₂MnO₃·(0.8) LiNi_{0.2}Mn_{0.7}Na_{0.1} O₂ | 200 | 3.6 | 7 | 9 |
| Example 34 | Li_{1.00}Ni_{0.54}Co_{0.14} Mn_{0.32}O₂ | 215 | 3.74 | 15 | 9 |
| Example 35 | Li_{1.00}Ni_{0.91}Co_{0.05} Mn_{0.04}O₂ | 225 | 3.63 | 15 | 9 |

**Table 12**

| | Battery capacity/Ah | Capacity retention ratio after 500 cycles (%) | Nail penetration manifestation | Internal short-circuit manifestation | Battery hot box test temperature (°C) |
|---|---|---|---|---|---|
| Example 31 | 130 | 95 | No fire | No fire | 160 |
| Example 32 | 166 | 91 | No fire | No fire | 160 |
| Example 33 | 166 | 95 | No fire | No fire | 170 |
| Example 34 | 105 | 90 | No fire | No fire | 168 |
| Example 35 | 120 | 91 | No fire | No fire | 173 |

As can be seen from the above test results in Table 12:
In the solutions of Examples 31 to 35 of the present application, the battery did not catch fire in the nail penetration test, and did not catch fire when in internal short-circuits. The battery capacity ranged from 105 Ah to 166 Ah.

It can thus be shown that materials used in the solutions of Examples 31 to 35 of the present application can effectively reduce the probability of thermal runaway of the battery while improving the battery capacity.

Further, the first active material of Example 34 and Example 35 was subjected to the battery cell hot box test, and thermal runaway occurred at a temperature of 160°C. Compared with the solution in Examples 31 to 34 where the temperature at which thermal runaway occurred for the first active material was selected to be greater than 160°C, the battery capacity performance of this solution was average.

Further, in the solutions of Examples 31 to 35 of the present application, the capacity retention rate of the battery after 500 cycles was 92% to 96%, and the battery had good cycle stability.

The described embodiments are a part of the embodiments of the present application rather than not all of the embodiments. The detailed description of the embodiments of the present application is not intended to limit the scope of the present application for which protection is claimed, but merely to indicate selected embodiments of the present application. Based on the embodiments in the present application, all other embodiments obtained by those of ordinary skill in the art without creative effort fall within the protection scope of the present application.

## Claims

1. A positive electrode plate, comprising a current collector, a conductive coating, a first active material layer and a second active material layer, wherein the conductive coating is formed on a surface of the current collector, the first active material layer is formed on a surface of the conductive coating, and the second active material layer is formed on a surface of the first active material layer;
the first active material layer comprises a first active material; the second active material layer comprises a second active material;
the first active material does not catch fire in a nail penetration test, and a method of fire-free nail penetration test comprises using the first active material to make a battery cell, charging the battery cell to 100% stage of charge, restraining the battery cell by a steel fixture having a hole in the middle, using a steel nail with a diameter of 2 mm to vertically penetrate the battery cell at a speed of 10 mm/s at 25°C; and standing for 30 min, during which the battery cell does not catch fire; and
the second active material has a gram capacity greater than or equal to 165 mAh/g.

2. The positive electrode plate according to claim 1, wherein
the first active material is subjected to a battery cell hot box test, and thermal runaway occurs at a temperature greater than 160°C; and
a method of the battery cell hot box test comprises using the first active material to make a battery cell, charging the battery cell to 100% state of charge, restraining the battery cell by a steel fixture, placing the battery cell in an oven and then standing, where the oven starting temperature is 130°C, and confirming the state of the battery cell after standing for 1 hour; if the battery cell does not fail after standing for 1 hour, increasing the temperature at 5°C/min, and standing for 30 min every time the temperature increases by 5°C, until thermal runaway occurs in the battery cell.

3. The positive electrode plate according to claim 1 or 2, wherein
the first active material comprises at least one of an olivine structural material or a spinel structural material.

4. The positive electrode plate according to claim 3, wherein
the olivine structural material comprises at least one of a lithium iron phosphate material, a lithium manganese iron phosphate material, or a lithium vanadium phosphate material.

5. The positive electrode plate according to claim 3, wherein
the spinel structural material comprises at least one of materials of lithium titanate, LiMn₂O₄ or Li₂MnNiO₄.

6. The positive electrode plate according to any one of claims 3 to 5, wherein
the first active material layer has a thickness of 7 µm to 80 µm.

7. The positive electrode plate according to any one of claims 3 to 6, wherein
Dᵥ50 of particles contained in the first active material layer is 0.5 µm to 20 µm.

8. The positive electrode plate according to any one of claims 3 to 7, wherein
the second active material has a gram capacity of 175 mAh/g to 250 mAh/g.

9. The positive electrode plate according to any one of claims 3 to 8, wherein
the second active material has a voltage plateau greater than or equal to 3.22 V, optionally, the second active material has a voltage plateau of 3.5 V to 3.9 V.

10. The positive electrode plate according to any one of claims 1 to 9, wherein
the second active material comprises a layered structural material.

11. The positive electrode plate according to claim 10, wherein
the layered structural material comprises at least one of a layered ternary material, lithium cobalt oxide, and a lithium-rich manganese-based material.

12. The positive electrode plate according to claim 10 or 11, wherein
the second active material layer has a thickness of 7 µm to 67 µm; optionally, the second active material layer has a thickness of 15 µm to 50 µm.

13. The positive electrode plate according to any one of claims 10 to 12, wherein
Dᵥ50 of particles contained in the second active material layer is 1 µm to 20 µm.

14. The positive electrode plate according to any one of claims 1 to 13, wherein
the conductive coating has a thickness of 0.1 µm to 2 µm; optionally, the conductive coating has a thickness of 0.5 µm to 1.5 µm.

15. The positive electrode plate according to claim 14, wherein
the conductive coating comprises a conductive agent and a binder.

16. The positive electrode plate according to claim 15, wherein
the conductive coating comprises, by mass percentage, 40% to 60% of the conductive agent and 40% to 60% of the binder.

17. The positive electrode plate according to claim 14, wherein
the conductive coating further comprises a neutralizing agent.

18. The positive electrode plate according to claim 17, wherein
the conductive coating comprises, by mass percentage, 40% to 55% of the conductive agent, 40% to 55% of the binder, and 1 to 10% of the neutralizing agent.

19. The positive electrode plate according to any one of claim 15 or 16, wherein
the conductive agent comprises at least one of carbon black, carbon nanotubes or graphene.

20. The positive electrode plate according to any one of claim 15 or 16, wherein
the binder comprises at least one of polyacrylic acid, polyvinyl alcohol, sodium carboxymethyl cellulose, polyvinylidene difluoride, or styrene-butadiene rubber.

21. The positive electrode plate according to any one of claim 17 or 18, wherein
the neutralizing agent comprises at least one of calcium hydroxide or lithium hydroxide.

22. A battery, comprising the positive electrode plate according to any one of claims 1 to 21.

23. An electrical apparatus, comprising the battery according to claim 22.
